# FASCICULE DE BREVET EUROPEEN

(11) **EP 3 166 813 B1**
(45) Date de publication et mention de la délivrance du brevet: **19.09.2018**
(21) Numéro de dépôt: 15756189.5
(22) Date de dépôt: 01.07.2015
(51) Int. Cl.: B60K 15/077

(54) **RÉSERVOIR COMPRENANT UN PIÈGE A LIQUIDE**
TANK MIT FLÜSSIGKEITSFALLE
TANK WITH LIQUID TRAP

(30) Priorité: 07.07.2014 FR 1456545
(43) Date de publication de la demande: 17.05.2017
(73) Titulaire: Plastic Omnium Advanced Innovation and Research, 1120 Bruxelles (BE)
(72) Inventeur: DHAUSSY, Franck, F-60280 Margny-Les-Compiègne (FR); PAOLINI, Gwereg, F-60175 Le Plessis Brion (FR)
(74) Mandataire: Remy, Vincent Noel Paul
(86) Numéro de dépôt international: PCT/FR2015/051803
(87) Numéro de publication internationale: WO 2016/005678

(56) Documents cités:
- DE-A1- 2 830 443
- DE-A1- 2 847 117
- FR-A1- 2 533 867
- US-A- 3 020 950
- US-A1- 2011 303 689

## Description

La présente invention concerne les réservoirs utilisés en particulier dans l'industrie automobile. Ces réservoirs comprennent une multitude d'équipements techniques annexes pour gérer la distribution des fluides contenus dans le réservoir selon les besoins du véhicule. Ces fluides se présentent préférentiellement sous forme liquide et peuvent être du carburant mais également des liquides utilisés par les systèmes de dépollution des gaz échappements tels que de l'urée.

Plus particulièrement, l'invention s'intéresse aux réservoirs dans le fond desquels est disposé un orifice de sortie. Le fluide contenu dans le réservoir s'écoule par cet orifice de sortie en direction des organes du véhicule sous l'effet de la gravité ou encore sous l'action d'une pompe d'extraction. Cet orifice de sortie est généralement situé au niveau d'un point bas du réservoir.

Par ailleurs, le liquide contenu dans le réservoir subit les mouvements d'accélération ou d'inclinaison du véhicule. Il en résulte que le niveau du liquide au-dessus de l'orifice de sortie peut connaitre des variations importantes pouvant provoquer un désamorçage des moyens d'extraction, alors que le réservoir contient encore une réserve de liquide utile supérieure au niveau de la quantité d'alerte basse.

Ce phénomène tend à s'aggraver lorsque le fond du réservoir est de forme plane ou quasi plane, ce qui s'avère être le cas lorsque l'on cherche à concevoir un réservoir occupant un volume extérieur réduit.

Un réservoir selon le préambule de la revendication 1 est connu du document US 3 020 950 A.

L'invention a pour objet de proposer une solution originale au problème posé ci-dessus, et de permettre de conserver un volume de liquide au-dessus de l'orifice de sortie, quelles que soient les conditions d'accélération et d'inclinaison du véhicule.

Le réservoir selon l'invention comprend des parois étanches pour contenir un liquide, une des parois formant un fond du réservoir, le fond du réservoir comportant une pluralité de cloisons délimitant entre elles des zones incluses successivement les unes à l'intérieur des autres, chacune des zones étant en communication avec sa zone incluse adjacente par l'intermédiaire d'un passage comportant un seuil, caractérisé en ce que
- le seuil du passage entre une zone et sa zone incluse adjacente constitue un point bas de ladite zone et un point haut de la zone incluse adjacente et,
- pour une zone donnée, le passage entre la zone dans laquelle ladite zone donnée est incluse et ladite zone donnée et le passage entre ladite zone donnée et la zone incluse dans ladite zone donnée, sont disposés dans des secteurs angulaires délimités par des angles géométriques imaginaires (a) opposés par le sommet, lequel sommet (s) se situe au droit d'une zone de plus bas niveau du réservoir (Z₄) lesdits angles ayant une mesure inférieure à 45°, préférentiellement inférieure à 30° et encore plus préférentiellement inférieure à 15°.

De la sorte, le liquide présent à l'intérieur des zones formées par les parois, à la manière d'un labyrinthe, est piégé, et seule une faible partie du liquide s'écoule en dehors des zones définies par les cloisons lorsque le réservoir est incliné ou subit des accélérations, en particulier lorsque le volume total contenu dans le réservoir est proche de la limite basse.

Le réservoir selon l'invention peut aussi comprendre isolément ou en combinaison les caractéristiques suivantes :
- A l'intérieur d'une zone donnée, une pente moyenne entre le seuil du passage avec la zone adjacente dans laquelle ladite zone est incluse et le seuil du passage avec la zone adjacente incluse dans ladite zone est comprise entre 0,5° et 5°.
- Le nombre de zones et la disposition des passages entre les zones sont adaptés pour retenir un volume de réserve de valeur prédéterminée lorsque le fond du réservoir est incliné par rapport à l'horizontale d'un angle compris entre 14° et 20°.
- Une zone est délimitée par au moins une cloison continue comprenant deux extrémités définissant un passage unique.
- Un orifice de sortie est disposé dans la zone la plus basse, qui est la zone incluse simultanément dans toutes les zones et formant la zone de plus bas niveau du réservoir.
- Le seuil du passage communiquant avec la zone de plus bas niveau du réservoir constitue le point le plus bas de l'ensemble des seuils de chacun des passages.
- Lorsque le volume total contenu dans le réservoir atteint une limite basse donnée, le liquide s'écoule par gravité jusqu'à la zone de plus bas niveau du réservoir en passant d'une zone à une autre par les passages aménagés entre chacune des zones.
- La hauteur des cloisons par rapport à la paroi du fond du réservoir augmente proportionnellement à leur éloignement de l'orifice de sortie.
- L'orifice de sortie est relié à une pompe d'extraction du liquide contenu dans le réservoir.

L'invention sera mieux comprise à la lecture des figures annexées, qui sont fournies à titre d'exemples et ne présentent aucun caractère limitatif, dans lesquelles :
- La figure 1 représente une vue de dessus du fond de réservoir représenté à la figure 1.
- La figure 2 représente une vue schématique en coupe d'un fond de réservoir selon une première variante de réalisation.
- La figure 3 représente une vue schématique en coupe d'un fond de réservoir selon une seconde variante de réalisation.
- Les figures 4, 5 et 6 illustrent les positions du réservoir contenant une quantité de liquide proche de la limite basse lorsque le réservoir est incliné dans des positions angulaires données.

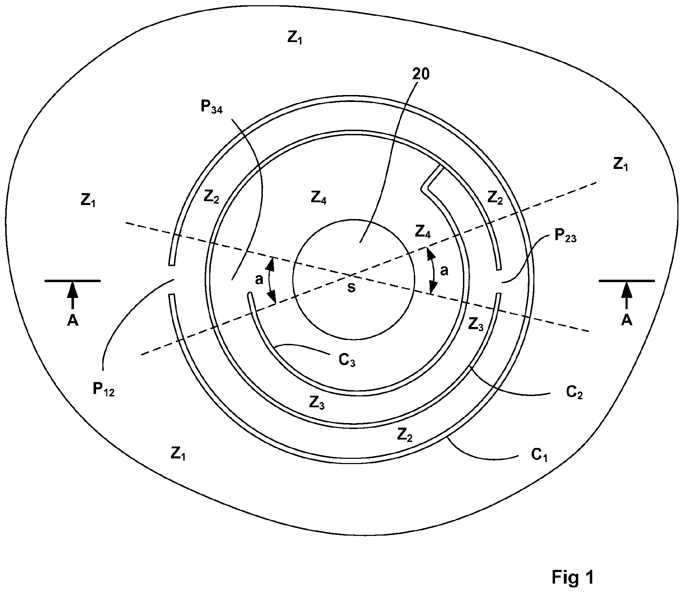

La figure 1 représente la paroi d'un fond de réservoir vue de l'intérieur.

En conditions d'usage, ce réservoir est destiné à contenir un liquide tel que par exemple du carburant ou de l'urée. Le réservoir est disposé dans le véhicule de sorte que le liquide s'écoule par gravité vers un point bas au niveau duquel est réalisé un orifice de sortie 22. Cet orifice 22 peut être intégré dans la paroi d'un module technique 20 comprenant une pompe d'extraction 21. La paroi 10 du fond du réservoir, et la paroi du module technique 20, assimilée ici à la paroi 10 du réservoir, sont donc disposées sensiblement à l'horizontale lorsque le véhicule circule ou est stationné sur un sol lui-même horizontal.

Des cloisons C₁, C₂, C₃, s'élevant vers l'intérieur du réservoir, sensiblement à la perpendiculaire de la paroi du fond du réservoir, entourent le module 20 en délimitant des zones Z₁, Z₂, Z₃, Z₄ incluses successivement les unes à l'intérieur des autres. Ainsi, la zone Z₁ contient la zone Z₂, qui contient la zone Z₃, qui elle-même contient la zone Z₄. Pour les besoins de l'exposé qui va suivre on ordonnera les zones par rangs successifs, Z₁ constituant la zone de rang inférieur, et Z₄ constituant, dans l'exemple servant de support à la présente description, la zone de rang le plus élevé. Bien évidemment le nombre de zones et de cloisons n'est pas limitatif.

Chacune des zones communique avec la zone adjacente dans laquelle elle est incluse par l'intermédiaire d'un passage aménagé dans la cloison servant de frontière entre les deux zones adjacentes. Ainsi, la zone Z₁ communique avec la zone Z₂ de rang supérieur par l'intermédiaire du passage P₁₂, la zone Z₂ communique avec la zone Z₃ par l'intermédiaire du passage P₂₃, et la zone Z₄ communique avec la zone Z₃ par l'intermédiaire du passage P₃₄. Le nombre de passage entre deux zones adjacentes est de préférence réduit à un voire deux passages

Le module technique 20 comprenant la pompe d'extraction 21 est disposé dans la zone Z₄ qui est la zone de rang supérieur incluse simultanément dans toutes les zones de rang inférieur. Cette zone est par construction la zone la plus basse de toutes les zones.

Le passage P₁₂ entre la zone Z₁ et la zone Z₂ et le passage P₂₃ entre la zone Z₂ et la zone Z₃ sont chacun situés dans des secteurs angulaires, délimités ici par les angles imaginaires formées par les lignes en pointillés illustrées à la figure 1. Ces angles sont opposés par leurs sommets s. Le sommet s est situé dans la zone Z₄ considérée comme étant la zone de plus bas niveau du réservoir. Les droites en pointillés forment entre elles un angle imaginaire a.

En considérant la zone Z₃ comme la zone donnée de référence, le passage P₂₃ entre la zone Z₂ et la zone Z₃ et le passage P₃₄ entre la zone Z₃ et la zone Z₄ sont situés respectivement dans les secteurs angulaires définis par les droites en pointillés.

Pour atteindre les performances recherchées par l'invention, la mesure de l'angle a est inférieure à 45°.

Plus cette valeur est faible, meilleure sera la rétention du liquide dans la zone de plus bas niveau du réservoir. Aussi, la valeur de l'angle a est préférentiellement inférieure à 30°, et encore plus préférentiellement inférieure à 15°.

La hauteur des cloisons est relativement limitée, et peut utilement être comprise, dans le cas d'un réservoir d'une vingtaine de litres, entre 5cm et 15cm. Elles doivent néanmoins avoir une hauteur minimale déterminée en fonction d'un volume donné, comme on le verra par la suite.

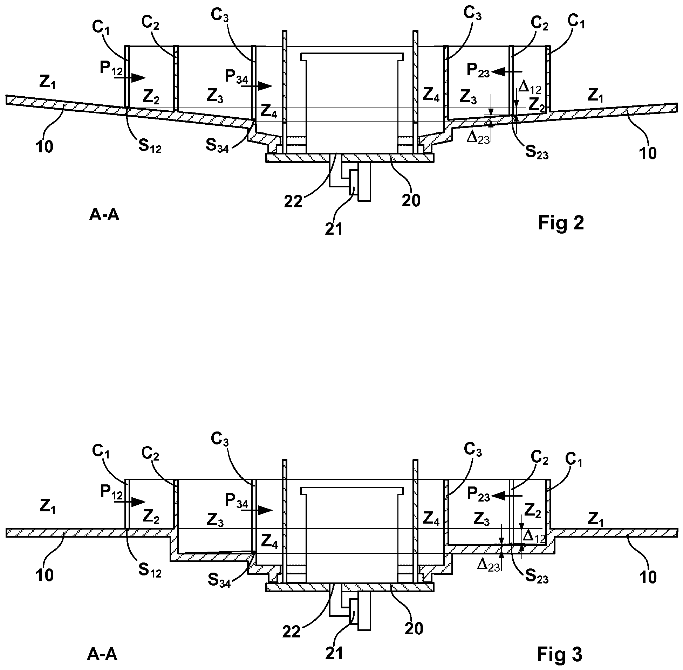

En référence aux figures 2 et 3, on observe que les passages entre deux zones sont matérialisés par un seuil (S₁₂, S₂₃, S₃₄) situé au niveau de la paroi du réservoir. Selon l'invention, on s'arrange pour que le seuil du passage entre une zone et une zone incluse adjacente de rang supérieur constitue un point bas de ladite zone et un point haut de la zone incluse adjacente de rang supérieur. Ainsi, le seuil S₁₂ qui constitue le seuil du passage P₁₂ entre la zone Z₁ et la zone Z₂ constitue un point bas de la zone Z₁ et un point haut de la zone Z₂. De même, le seuil S₂₃ qui constitue le seuil du passage P₂₃ est un point bas de la zone Z₂ et un point haut de la zone Z₃. Enfin, le seuil S₃₄, formant le seuil du passage P₃₄, constitue un point bas de la zone Z₃ et un point haut de la zone Z₄.

La notion de point haut et de point bas est évaluée ici en fonction de l'altitude de ces points par rapport à un plan sensiblement parallèle au plan formé par le fond du réservoir ou, plus précisément, au plan horizontal, lorsque le véhicule dans lequel est installé le réservoir est lui-même stationné sur un plan parfaitement horizontal.

En référence à ces repères géométriques, on considère que le point haut d'une zone constitue le point d'élévation maximale, et que le point bas d'une zone constitue le point d'élévation minimale de la zone. Ainsi le seuil S₁₂ est surélevé par rapport au seuil S₂₃ d'une valeur Δ₁₂, et le seuil S₂₃ est surélevé par rapport au seuil S₃₄ d'une valeur Δ₂₃.

Cet arrangement particulier permet au liquide de s'écouler par gravité d'une zone à une autre en passant par les passages successifs P₁₂, P₂₃ et P₃₄.

L'homme du métier comprendra aisément la nécessité de ne pas laisser subsister de points hauts localisés au sein d'une même zone de manière à éviter la formation de poches de retenues dans lesquelles le liquide peut s'accumuler de manière non désirée.

Lorsque le véhicule est stationné sur un sol horizontal, l'écoulement du liquide entre le passage d'entrée et le passage de sortie d'une zone se fait dans un canal formé par les cloisons délimitant la zone et par la paroi du fond du réservoir.

Les cloisons délimitent un labyrinthe dans lequel le liquide s'écoule vers la zone Z₄ de plus bas niveau, lorsque le fond du réservoir est disposé sensiblement à l'horizontale. et le seuil S₃₄ d'entrée dans la zone de plus bas niveau Z₄ est le seuil ayant l'élévation la plus basse par rapport aux seuils d'entrée des zones de rangs inférieurs.

La paroi 10 du fond du réservoir peut être configurée, comme cela est illustré à la figure 2, de manière à former une pente continue orientée sensiblement en direction de la zone de rang supérieur, correspondant à la zone de plus bas niveau dans laquelle est disposé l'orifice de sortie 22 correspondant au point d'aspiration de la pompe d'extraction 21.

La paroi du réservoir peut également être configurée de manière à former au sein de chaque zone une rampe en pente continue allant du seuil d'entrée de la zone vers le seuil de sortie vers la zone adjacente incluse de rang supérieur.

De manière alternative, comme cela est illustré à la figure 3, le passage d'une zone vers la zone incluse adjacente peut se faire sous forme de marches successives de hauteurs non nulles. La paroi du fond du réservoir reste alors sensiblement horizontale au sein de chacune des zones.

Toutes ces adaptations peuvent être réalisées sans trop de difficultés lorsque le réservoir est réalisé par moulage, ou plus aisément encore par injection, d'un matériau thermoplastique.

On évalue une pente moyenne calculée sur la base de la différence d'élévation entre le seuil d'entrée et le seuil de sortie d'une zone (Δ₁₂, Δ₂₃) et le plus court trajet devant être réalisé par le liquide pour s'écouler par gravité depuis le passage d'entrée dans la zone jusqu'au passage de sortie de la zone. Cette pente moyenne est de préférence comprise entre 0,5° et 5°.

Les cloisons ainsi disposées ont deux fonctions bien distinctes.

Lorsque la quantité de liquide contenue dans le réservoir est encore supérieure à la limite basse, le niveau de liquide dépasse en règle générale le niveau des cloisons. Et le liquide contenu dans le réservoir s'écoule directement vers l'orifice de sortie 22 du réservoir où se situe le point d'aspiration de la pompe. Toutefois, lorsque le véhicule subit de fortes accélérations longitudinales ou transversales, les mouvements de liquide dans le réservoir sont susceptibles de découvrir l'orifice de sortie pouvant provoquer un désamorçage de la pompe. Les cloisons ont pour effet de freiner ces transferts de liquide et de conserver une quantité minimale de liquide dans la zone Z₄ où se situe l'orifice de sortie, de sorte qu'à tout instant, la pompe reste alimentée.

On a donc intérêt à limiter le nombre et la largeur des passages entre deux zones, de manière à limiter les débits de transfert d'une zone à une autre. De bons résultats sont obtenus en aménageant au plus deux passages entre deux sones adjacentes et en limitant la largeur des passages à la hauteur des cloisons.

A cet égard, il s'avère intéressant de séparer deux zones adjacentes par une cloison continue comportant deux extrémités délimitant le passage entre ces deux zones, comme cela est le cas pour la cloison C₁ entre la zone Z₁ et la zone Z₂ et dont les deux extrémités délimitent le passage P₁₂, ainsi que pour la cloison C₂ et le passage P₂₃ entre les zones Z₂ et Z₃.

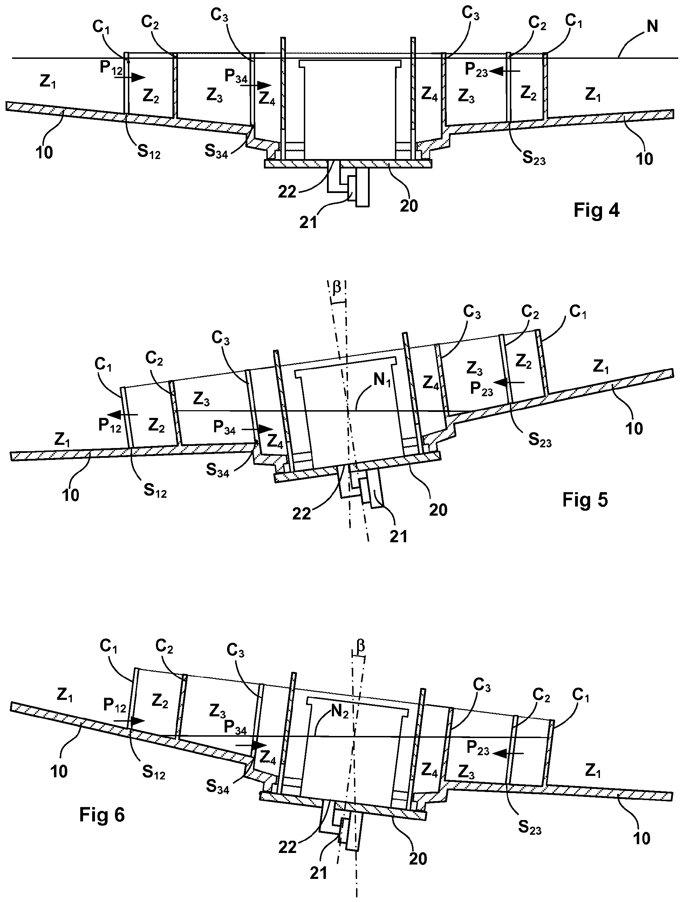

La deuxième fonction des cloisons, illustrée plus en détails aux figures 4, 5 et 6, est de servir de piège à liquide et de conserver un volume de réserve dans le réservoir lorsque les conditions d'inclinaison du véhicule sont extrêmes. Cette fonction est particulièrement importante lorsque le réservoir du véhicule ne contient plus qu'une quantité limitée de liquide ou que ce volume atteint une limite basse déterminée, et que le véhicule a été stationné en position inclinée.

Le liquide contenu dans le réservoir se concentre alors dans une partie du réservoir et le niveau du liquide contenu dans la zone Z₁ de rang le plus bas est situé à un niveau inférieur au niveau du seuil S₁₂ du passage P₁₂ vers la zone Z₂ adjacente à la zone Z₁ incluse dans cette dernière. Le liquide ne s'écoule donc plus par gravité entre ces deux zones.

Au moment du redémarrage du véhicule, il est alors nécessaire de pouvoir disposer d'une quantité minimale de carburant ou d'urée pour franchir une distance au-delà de laquelle le véhicule roule à nouveau sur un sol horizontal.

Les cloisons ont alors pour objet de piéger une quantité de liquide suffisante pour assurer ce redémarrage. Cette quantité de liquide est désignée sous le nom de volume de réserve.

La figure 4 illustre le cas dans lequel le réservoir est en position sensiblement horizontale et ne contient pus qu'une quantité minimale de liquide assimilée au niveau de liquide correspondant à la limite basse. Le niveau N du liquide restant dans le réservoir est représenté par un trait horizontal. La pompe 21 reste alimentée normalement.

Lorsque le véhicule, et donc le réservoir, est stationné sur un sol incliné d'un angle β par rapport à l'horizontale, une partie du liquide (non représenté) s'écoule dans la zone Z₁ en dessous du niveau du seuil S₁₂. Le piège à liquide formé par les cloisons permet de conserver une quantité minimale de liquide, au-dessus de l'orifice de sortie 22 de manière à alimenter la pompe d'extraction 21 dans ces conditions extrêmes. Ces niveaux sont matérialisés par les lignes N₁ et N₂ dans les figures 5 et 6.

On observe que, selon la direction de l'inclinaison du réservoir, le liquide contenu à l'intérieur des parois peut s'échapper par un passage, comme cela est illustré à la figure 5, où tout le liquide contenu dans la zone Z₂ s'échappe par le passage P₁₂.

On entend par direction de l'inclinaison, la direction dans laquelle le véhicule est incliné soit, vers l'avant ou l'arrière soit sur un côté soit sur un autre côté, soit dans une position quelconque entre ces directions. Ceci revient à considérer que, lorsque le véhicule est incliné par rapport à l'horizontale, la direction d'inclinaison est quelconque, et que la direction sensiblement perpendiculaire au fond du réservoir est située dans un angle solide β donné autour de la direction verticale, comme cela est illustré dans les figures 5 et 6.

On s'arrange alors pour que le volume de réserve emprisonné par les parois du piège à liquide soit supérieur à un volume prescrit donné et fixé par les recommandations du constructeur de véhicule, lorsque le véhicule est incliné par rapport à la direction verticale, selon un angle solide β compris entre 14° et 20°, et que le volume total contenu dans le réservoir a atteint la limite basse. Plus précisément, ce volume de réserve est défini comme le volume capable de s'écouler par gravité vers l'orifice de sortie 22 situé dans la zone de plus bas niveau Z₄ lorsque le véhicule est incliné d'un angle β par rapport à l'horizontale et que le volume total de liquide contenu dans le réservoir a atteint la limite basse.

Ce volume de réserve sera déterminé par le nombre de zones et donc le nombre de cloisons, par la hauteur des cloisons et par les positions respectives des passages d'entrée et de sortie les uns vis-à-vis des autres.

De préférence, on dispose les passages de manière équi réparties autour de l'orifice de sortie 22 du réservoir, ce qui revient à ce que, dans le plan de la paroi du fond du réservoir, les écarts angulaires entre les passages par rapport à l'orifice de sortie 22 soient sensiblement constants. En présence de deux passages on disposera ces deux passages sensiblement en des points diamétralement opposés par rapport à l'orifice de sortie 22 ; en présence de trois passages on disposera les passages sensiblement à 120° les uns par rapport aux autres autour de l'orifice de sortie, pour quatre passages à 90°, et ainsi de suite. Cette disposition favorise également l'écoulement du liquide entre les zones les plus proches de l'orifice 22 relié à la pompe d'extraction.

Ainsi, on ne permettra pas que le passage P₁₂ entre la zone extérieure Z₁ et la zone incluse adjacente de rang immédiatement supérieur Z₂ et le passage P₂₃ entre la zone Z₂ et la zone Z₃ soient situés l'un en face de l'autre, de manière à éviter que les zones Z₂ et Z₃ se vident simultanément, lorsque le véhicule est incliné dans la direction de ces deux passages.

L'homme du métier ajustera alors la position des passages en calculant le volume résiduel emprisonné dans chacune des zones, et s'arrangera pour que ce volume soit supérieur ou égal au volume de réserve prédéterminé dans toutes les directions d'inclinaison du réservoir déterminées par les valeurs angulaires indiquées ci-dessus, et qu'il puisse s'écouler par gravité vers l'orifice de sortie 22 situé dans la zone de plus bas niveau Z₄.

Il pourra, si nécessaire, augmenter localement la hauteur des cloisons, en particulier la hauteur des cloisons les plus éloignées de l'orifice de sortie 22 du piège à liquide.

L'augmentation du nombre de cloisons peut également s'avérer utile. Toutefois, un trop grand nombre de cloisons a pour effet d'emprisonner, dans certaines configurations d'inclinaisons, un volume non négligeable dans les zones de rang inférieur du piège à liquide, sans que ce volume puisse s'écouler vers les zones de rang supérieur proches de la zone où se situe l'orifice de sortie. A cet égard, un cloisonnement permettant de délimiter quatre à cinq zones semble constituer un bon compromis.

On observera en conclusion qu'une grande liberté est laissée au concepteur de cette partie du réservoir pour adapter le nombre et la forme des cloisons tout en restant dans le cadre des enseignements de la présente invention.

## Revendications

1. Réservoir comprenant des parois étanches pour contenir un liquide, une des parois (10) formant un fond du réservoir, le fond (10) du réservoir comportant une pluralité de cloisons (C₁, C₂, C₃) délimitant entre elles des zones (Z₁, Z₂, Z₃, Z₄) incluses successivement les unes à l'intérieur des autres, chacune des zones étant en communication avec une zone incluse adjacente par l'intermédiaire d'un passage (P₁₂, P₂₃, P₃₄) comportant un seuil (S₁₂, S₂₃, S₃₄), **caractérisé en ce que** :
- le seuil du passage entre une zone et une zone incluse adjacente constitue un point bas de ladite zone et un point haut de la zone incluse adjacente et,
- pour une zone donnée, le passage entre ladite zone donnée et la zone dans laquelle ladite zone donnée est incluse, et le passage entre ladite zone donnée et la zone incluse dans ladite zone donnée, sont disposés dans des secteurs angulaires délimités par des angles géométriques imaginaires (a) opposés par le sommet, lequel sommet (s) se situe au droit d'une zone de plus bas niveau du réservoir (Z₄), lesdits angles (a) ayant une mesure inférieure à 45°, préférentiellement inférieure à 30° et encore plus préférentiellement inférieure à 15°.

2. Réservoir selon la revendication 1, dans lequel, à l'intérieur d'une zone donnée, une pente moyenne entre le seuil du passage avec la zone adjacente dans laquelle ladite zone est incluse et le seuil du passage avec la zone adjacente incluse dans ladite zone est comprise entre 0,5° et 5°.

3. Réservoir selon la revendication 1 ou la revendication 2, dans lequel le nombre de zones et la disposition des passages entre les zones sont adaptés pour retenir un volume de réserve de valeur prédéterminée lorsque le fond du réservoir est incliné par rapport à l'horizontale d'un angle compris entre 14° et 20°.

4. Réservoir selon l'une des revendications 1 à 3, dans lequel une zone est délimitée par au moins une cloison (C₁, C₂) continue comprenant deux extrémités définissant un passage unique (P₁₂, P₂₃).

5. Réservoir selon l'une des revendications 1 à 4, dans lequel un orifice de sortie (22), est disposé dans la zone (Z₄) incluse simultanément dans toutes les zones, et formant la zone de plus bas niveau du réservoir, ledit orifice de sortie (22) formant le point de plus bas niveau du réservoir.

6. Réservoir selon la revendication 5, dans lequel le seuil du passage (P₃₄) communiquant avec la zone (Z₄) de plus bas niveau du réservoir constitue le point le plus bas de l'ensemble des seuils de chacun des passages.

7. Réservoir selon la revendication 5 ou la revendication 6, dans lequel, lorsque le volume total contenu dans le réservoir atteint une limite basse donnée, le liquide s'écoule par gravité jusqu'à la zone (Z₄) de plus bas niveau du réservoir en passant d'une zone à une autre par les passages (P₁₂, P₂₃, P₃₄) aménagés entre chacune des zones.

8. Réservoir selon l'une des revendications 5 à 7, dans lequel la hauteur des cloisons (C₁, C₂, C₃) par rapport à la paroi (10) du fond du réservoir augmente proportionnellement à leur éloignement de l'orifice de sortie (22).

9. Réservoir selon l'une des revendications 5 à 8, dans lequel l'orifice de sortie (22) est relié à une pompe d'extraction (21) du liquide contenu dans le réservoir.

## Patentansprüche

1. Tank umfassend Dichtwände zur Beinhaltung einer Flüssigkeit, eine der Wände (10) den Boden des Tanks bildend, wobei der Boden (10) des Tanks umfassend eine Vielzahl von Trennwänden (C₁, C₂, C₃) abgrenzend die inbegriffenen Zonen (Z₁, Z₂, Z₃, Z₄), die nacheinander ineinander übergehen, wobei jede Zone in Verbindung mit einer enthaltenden, angrenzenden Zone steht, durch einen Durchgang, (P₁₂, P₂₃, P₃₄) umfassend eine Schwelle (S₁₂, S₂₃, S₃₄), **dadurch gekennzeichnet, dass**:
- die Schwelle des Übergangs zwischen einer Zone und einer angrenzenden, inbegriffenen Zone einen Tiefpunkt der besagten Zone bildet und einen Hochpunkt der angrenzenden, inbegriffenen Zone und,
- für eine gegebene Zone, wobei der Übergang zwischen der besagten gegebenen Zone und der Zone, in welcher die besagte, gegebene Zone sich befindet, und der Durchgang zwischen der besagten, gegebenen Zone und der Zone, die in der besagten Zone inbegriffen ist, in begrenzende Winkelsektoren angeordnet sind, durch imaginäre geometrische Winkel (a) entgegengesetzt der Spitze, in welcher Spitze (s) sich eine Zone auf tiefster Ebene des Tanks (Z4) befindet, der besagte Winkel (a) ein Maß von weniger als 45º aufweist, vorzugsweise weniger als 30º und noch bevorzugter weniger als 15º.

2. Tank gemäß Anspruch 1, wobei innerhalb einer gegebenen Zone, eine durchschnittliche Steigung zwischen der Schwelle des Durchgangs mit der angrenzenden Zone,
in welcher sich die besagte Zone befindet und die Schwelle des Durchgangs mit der angrenzenden Zone, die sich in der besagten Zone befindet, zwischen 0,5º und 5° beträgt.

3. Tank gemäß Anspruch 1 oder Anspruch 2, wobei die Anzahl von Zonen und die Anordnung der Durchgänge zwischen den Zonen angepasst sind, um ein Reservevolumen eines vorbestimmten Wertes zurückzuhalten, wenn der Boden des Tanks horizontal mit einem Winkel zwischen 14º und 20º geneigt ist.

4. Tank gemäß einem der Ansprüche 1 bis 3, wobei eine Zone durch mindestens eine kontinuierliche Trennwand (C₁, C₂) getrennt ist, die zwei Enden umfasst, einen einzelnen Durchgang (P₁₂, P₂₃) definierend.

5. Tank gemäß einem der Ansprüche 1 bis 4, in welchem eine Austrittsöffnung (22) in der Zone (Z₄) inbegriffen ist, die gleichzeitig in allen Zonen enthalten ist, und die tiefste Zone des Tanks bildet, wobei die besagte Austrittsöffnung (22) den tiefsten Punkt des Tanks bildet.

6. Tank gemäß Anspruch 5, wobei die Schwelle des Durchgangs (P₃₄) weitergehend mit der Zone (Z₄) den tiefsten Punkts des Tanks bildet; den tiefsten Punkt aller Schwellen für jeden Durchgang.

7. Tank gemäß Anspruch 5 oder Anspruch 6, in welchem das enthaltende Gesamtvolumen im Tank einen bestimmten unteren Grenzwert erreicht, wobei die Flüssigkeit durch die Schwerkraft bis zu der tiefsten Zone (Z₄) des Tanks fließt, die von einer Zone zur anderen durch die Durchgänge (P₁₂, P₂₃, P₃₄) übergeht, die Durchgänge (P₁₂, P₂₃, P₃₄) sind zwischen den Zonen angeordnet.

8. Tank gemäß einem der Ansprüche 5 bis 7, in welchem die Höhe der Trennwände (C₁,
C₂, C₃) in Bezug auf die Wand (10) des Tankbodens proportional zunimmt mit der räumlichen Entfernung der Austrittsöffnung (22).

9. Tank gemäß einem der Ansprüche 5 bis 8, in welchem die Austrittsöffnung (22) mit einer Extraktionspumpe (21) verbunden ist, mit der im Tank enthaltenden Flüssigkeit.

## Claims

1. Container comprising leak-tight walls for containing a liquid, one of the walls (10) forming the bottom of the container, the bottom (10) of the container comprising a plurality of partition walls (C₁, C₂, C₃) bounding zones (Z₁, Z₂, Z₃, Z₄) between them successively enclosed one within the other, each of the zones being in communication with an adjacent enclosed zone through a passageway (P₁₂, P₂₃, P₃₄) comprising a threshold (S₁₂, S₂₃, S₃₄), **characterized in that**:
- the threshold in the passageway between a zone and an adjacent enclosed zone comprises a low point in the said zone and a high point in the adjacent enclosed zone, and,
- for a given zone, the passageway between the said given zone and the zone in which the said given zone is enclosed and the passageway between the said given zone and the zone enclosed in the said given zone are arranged within angular sectors bounded by imaginary geometrical angles (a) which are opposite to each other at the summit, the summit (s) being located at the lowest level zone in the container (Z₄), the said angles (a) being less than 45°, preferably less than 30° and even more preferably less than 15°.

2. Container according to claim 1, wherein within a given zone an average gradient between the threshold in the passageway to the adjacent zone in which the said zone is enclosed and the threshold in the passageway to the adjacent zone enclosed in the said zone is between 0.5° and 5°.

3. Container according to claim 1 or claim 2, wherein the number of zones and the arrangement of the passageways between the zones is adjusted so as to retain a reserve volume of a predetermined amount when the bottom of the container is inclined at an angle of between 14° and 20° to the horizontal.

4. Container according to any one of claims 1 to 3, wherein a zone is bounded by at least one continuous partition wall (C₁, C₂) comprising two ends defining a single passageway (P₁₂, P₂₃).

5. Container according to any one of claims 1 to 4, wherein an outlet (22), is located in the zone (Z₄) which is simultaneously enclosed within all the zones, forming the lowest zone in the container, the said outlet (22) forming the lowest point in the container.

6. Container according to claim 5, wherein the threshold in the passageway (P₃₄) communicating with the lowest zone (Z₄) in the container constitutes the lowest point of all the thresholds in each of the passageways.

7. Container according to claim 5 or claim 6, wherein when the total volume present in the container reaches a given lower limit the liquid flows by gravity to the lowest zone (Z₄) in the container by passing from one zone to another through the passageways (P₁₂, P₂₃, P₃₄) provided between each of the zones.

8. Container according to any one of claims 5 to 7, wherein the height of the partition walls (C₁, C₂, C₃) in relation to the bottom wall (10) of the container increases in proportion to their distance from the outlet (22) .

9. Container according to any one of claims 5 to 8, in which the outlet (22) is connected to an extraction pump (21) extracting the liquid present in the container.
